# EUROPÄISCHE PATENTANMELDUNG

(11) **EP 2 995 535 A1**
(43) Veröffentlichungstag der Anmeldung: **16.03.2016**
(21) Anmeldenummer: 14184077.7
(22) Anmeldetag: 09.09.2014
(51) Int. Cl.: B62D 33/077, F16B 29/00, B62D 27/06, F16B 19/10, F16B 13/06

(54) **Nutzfahrzeug mit Schraubverbindung sowie Verfahren zur Herstellung des Nutzfahrzeugs und zur Herstellung eines Dübelelements**

(71) Anmelder: Schmitz Cargobull AG, 48341 Altenberge (DE)
(72) Erfinder: Kötter, Jürgen, 49545 Tecklenburg (DE); Matzner, Daniel, 49086 Osnabrück (DE)
(74) Vertreter: Cohausz & Florack

(57) **Zusammenfassung**

Beschrieben und dargestellt ist ein Nutzfahrzeug (1), insbesondere Anhänger oder Sattelauflieger, mit einer Tragstruktur (13) und einem Anbauteil (5), wobei das Anbauteil (5) über wenigstens eine Schraubverbindung (10) mit der Tragstruktur (13) verbunden ist und wobei die wenigstens eine Schraubverbindung (10) eine wenigstens teilweise das Anbauteil (5) und die Tragstruktur (13) durchdringende Schraube (21) umfasst. Um eine zuverlässigere und langlebigere Verbindung zwischen dem Anbauteil und der Tragstruktur zu erhalten, ist vorgesehen, dass die wenigstens eine Schraubverbindung (10) ein wenigstens teilweise das Anbauteil (5) und die Tragstruktur (13) durchdringendes Dübelelement (16) umfasst und dass das Dübelelement (16) in der Auszugsrichtung der Schraube (21) formschlüssig an der Tragstruktur (13) gehalten ist.

## Beschreibung

Die Erfindung betrifft ein Nutzfahrzeug, insbesondere Anhänger oder Sattelauflieger, mit einer Tragstruktur und einem Anbauteil, wobei das Anbauteil über wenigstens eine Schraubverbindung mit der Tragstruktur verbunden ist und wobei die wenigstens eine Schraubverbindung eine wenigstens teilweise das Anbauteil und die Tragstruktur durchdringende Schraube umfasst. Ferner betrifft die Erfindung ein Verfahren zur Herstellung eines, vorzugsweise einstückigen, Dübelelements. Zudem betrifft die Erfindung ein Verfahren zum Verbinden eines Anbauteils mit einer Tragstruktur eines Nutzfahrzeugs, insbesondere Anhängers oder Sattelaufliegers.

Bei den Nutzfahrzeugen der genannten Art handelt es sich insbesondere um solche, die zum Transport von Gütern im öffentlichen Straßenverkehr vorgesehen sind. Die Nutzfahrzeuge können von einer motorisierten Zugmaschine gezogen werden, wobei die Nutzfahrzeuge beispielsweise in Form von Anhängern oder Sattelauflieger ausgebildet sind. Die bekannten Nutzfahrzeuge tragen zum Transport der Ladung einen Aufbau, der in unterschiedlicher Weise ausgebildet sein kann.

Der Aufbau kann einen Laderaum umschließen oder wenigstens eine Ladefläche bereitstellen, auf der die zu transportierende Ladung während des Transports abgestellt werden kann und die durch einen Ladeboden gebildet wird. Die Aufbauten weisen also wenigstens einen Ladeboden auf, der über eine Rahmenstruktur aus Längsträgern und Querträgern abgestützt ist. Die Rahmenstruktur kann folglich als Tragstruktur für ein Anbauteil in Form des Ladebodens angesehen werden. Die Tragstruktur kann Teil des Chassis oder Teil des vom Chassis getragenen Aufbaus des Nutzfahrzeugs sein. Wenn die Tragstruktur Teil des Aufbaus ist, ist die Tragstruktur typischerweise auf dem Chassis des Nutzfahrzeugs montiert. Damit das Anbauteil fest mit der Tragstruktur verbunden bleibt, ist das Anbauteil über Schraubverbindungen mit der Tragstruktur verbunden.

Bei sogenannten Baufahrzeugaufbauten sind neben einem Ladeboden zusätzlich eine Stirnwand, zwei Seitenwände und eine Rückwand vorgesehen. Die Seitenwände und die Rückwand können typischerweise zum Be- und Entladen umgeklappt werden. Nach oben ist der Baufahrzeugaufbau offen. Im Gegensatz dazu ist beim Planenaufbau der Laderaum im Wesentlichen durch eine Plane umschlossen. Die Plane wird dabei von einer Gerüststruktur aus Rungen, Längsholmen und quer verlaufenden Spriegeln gehalten. Planenaufbauten, bei denen die Seitenplanen zum Be- und Entladen nach vorne oder hinten aufgeschoben werden können, werden auch als Curtainsider bezeichnet. Aufbauten von Nutzfahrzeugen mit Seitenwänden, einer Stirnwand, einer Rückwand sowie einem Dach werden als Kofferaufbauten bezeichnet. Dabei sind die Seitenwände, das Dach und die Stirnwand typischerweise durch stabile Paneele gebildet, die an den Außenseiten strukturgebende Decklagen und dazwischen eine Kernanlage aus geschäumtem Kunststoff aufweisen. Deshalb werden Kofferaufbauten vielfach zum Trockentransport von feuchtigkeitsempfindlichen Gütern verwendet. Da der geschäumte Kunststoff nicht nur zur Stabilität der Paneele beiträgt, sondern zudem in besonderer Weise zur thermischen Isolation geeignet ist, werden Kofferaufbauten zudem zum Kühltransport von temperaturempfindlichen Gütern eingesetzt.

Bei den bekannten Aufbauten von Nutzfahrzeugen kommt es durch die während des Betriebs auftretenden Verwindungen immer wieder dazu, dass sich Schraubverbindungen zwischen dem Ladeboden und den Längsträgern bzw. den Querträgern der Tragstruktur lösen. Dies beeinträchtigt die Verbindung zwischen dem Ladeboden und der Tragstruktur. Zudem können sich lösende Schrauben gegenüber dem Ladeboden nach oben vorstehen, was zu einer Beschädigung der Ladung führen kann. Dieses Problem wird noch dadurch verstärkt, dass die Bauteildicken moderner Nutzfahrzeuge immer weiter reduziert werden, so dass das in den Längsträgern und/oder den Querträgern der Tragstruktur eingebrachten Gewinde die beim Betrieb des Nutzfahrzeugs auf die Schraubverbindungen wirkenden Kräfte nicht mehr in zufriedenstellender Weise aufnehmen können. Durch die Verwindung der Nutzfahrzeuge führen die Schrauben in den Gewinden der Tragstruktur Pendelbewegungen aus, die zu einer Aufspaltung und Zerstörung der Gewinde der Tragstruktur und/oder der Schrauben führen können. Auf diese Weise können die Schrauben ihren Halt verlieren und gegebenenfalls sogar ausreißen.

Die beschriebenen Probleme treten insbesondere bei der Befestigung des Ladebodens an der Rahmenstruktur aus Längsträgern und Querträgern über die dort vorgesehenen Schraubverbindungen auf. Grundsätzlich sind diese Probleme jedoch nicht auf den Ladeboden beschränkt, sondern können auch bei anderen Schraubverbindungen zwischen Anbauteilen und Tragstrukturen auftreten. Die Anbauteile und Tragstrukturen müssen nicht, können aber Teile eines Nutzfahrzeugs, insbesondere eines Aufbaus sein. Dies gilt insbesondere auch deshalb, weil die Nutzfahrzeuge, insbesondere die Aufbauten, insgesamt nicht unerheblichen Verwindungen während des Betriebs im öffentlichen Straßenverkehr ausgesetzt sind.

Die Verwendung von Dübelelementen zur Befestigung von Bauteilen ganz allgemein sowie zur Befestigung von Anbauteilen und Tragstrukturen im Speziellen, insbesondere von Ladeböden an Rahmenstrukturen oder auch zu anderen Zwecken, wird oftmals nicht in Erwägung gezogen. Metallische Dübelelemente können nämlich wirtschaftlich nur in geringen Längen hergestellt werden. Zudem ist selbst die Herstellung solcher Dübelelemente noch recht aufwändig und daher mit einem erheblichen Kostenaufwand verbunden. Dübelelemente werden meist mehrteilig ausgebildet, was zu erhöhten Fertigungskosten führt. Bei bestimmten Dübelelementen ist auch eine einteilige Herstellung bekannt. Allerdings werden diese Dübelelemente typischerweise im Wege des Tiefziehens hergestellt, was nur sehr geringe Längen ermöglicht. Es besteht daher auch hinsichtlich der Herstellung von Dübelelementen weiter Optimierungsbedarf.

Der vorliegenden Erfindung liegt daher die Aufgabe zugrunde, das eingangs genannte und zuvor näher beschriebene Nutzfahrzeug derart auszugestalten und weiterzubilden, dass eine zuverlässigere und langlebigere Verbindung zwischen dem Anbauteil und der Tragstruktur erhalten wird. Zudem liegt der vorliegenden Erfindung die Aufgabe zugrunde, die Dübelelemente der zuvor genannten Art derart auszugestalten und weiterzubilden, dass diese in größerer Länge und/oder zu geringeren Kosten gefertigt werden können.

Die zuvor genannte Aufgabe ist bei einem Aufbau nach dem Oberbegriff des Anspruchs 1 dadurch gelöst, dass die wenigstens eine Schraubverbindung ein wenigstens teilweise das Anbauteil und die Tragstruktur durchdringendes Dübelelement umfasst und dass das Dübelelement in der Auszugsrichtung der Schraube formschlüssig an der Tragstruktur gehalten ist.

Die Schraube der wenigstens einen Schraubverbindung wird nicht ausschließlich, insbesondere sogar überhaupt nicht, in der Tragstruktur selbst gehalten, sondern vielmehr an der Tragstruktur, und zwar über ein zusätzliches Element, nämlich ein Dübelelement. Die zusätzliche Verwendung eines Dübelelements macht zwar die Schraubverbindung insgesamt aufwendiger, allerdings zahlt sich dieser Aufwand aus. Es ist nämlich nicht mehr erforderlich, ein Gewinde für die Schraube der wenigstens einen Schraubverbindung zwischen dem Anbauteil und der Tragstruktur vorzusehen. Die Schraube wird nämlich durch das Dübelelement formschlüssig an der Tragstruktur gehalten. Zudem können durch das Dübelelement die Zuverlässigkeit und die Langlebigkeit der Schraubverbindung verbessert werden.

Wenn sich das Nutzfahrzeug oder der Aufbau verwindet, während das Nutzfahrzeug im öffentlichen Straßenverkehr bewegt wird, kann die resultierende pendelnde Bewegung der Schraube der wenigstens einen Schraubverbindung diese nicht mehr ohne Weiteres lösen. Das Dübelelement ist trotz einer pendelnden Bewegung der Schraube fest in Anlage an der Tragstruktur und an der Schraube, weshalb die Schraube und damit das Anbauteil auch bei einer andauernden und/oder erheblichen Verwindung des Nutzfahrzeugs an der Tragstruktur gehalten wird. Dies gilt umso mehr, wenn das Dübelelement insbesondere im Bereich der Anlage an der Tragstruktur eine gewisse Elastizität aufweist. Dies führt nämlich ganz anders als bei der Tragstruktur, mit der die Schrauben im Stand der Technik verschraubt sind, nicht zu Instabilitäten der Schraubverbindung und des Nutzfahrzeugs insgesamt.

Zur Montage des Anbauteils an der Tragstruktur kann eine einzige Schraubverbindung ausreichen. Allerdings wird es in vielen Fällen bevorzugt sein, eine Mehrzahl von Schraubverbindungen zur Montage des Anbauteils an der Tragstruktur vorzusehen. Bedarfsweise können sogar mehrere Reihen von Schraubverbindungen vorgesehen werden, insbesondere wenn es sich um große Anbauteile wie etwa Ladeböden handelt.

Bei einer ersten bevorzugten Ausgestaltung des Nutzfahrzeugs ist das Anbauteil der Ladeboden oder wenigstens die Tragschicht des Ladebodens. Alternativ oder zusätzlich wird bei dieser besonders bevorzugten Ausgestaltung des Nutzfahrzeugs die Tragstruktur durch wenigstens einen Längsträger und/oder wenigstens einen Querträger des Nutzfahrzeugs, insbesondere eines Chassis oder eines Aufbaus des Nutzfahrzeugs, gebildet. Dies ist insoweit bevorzugt, als dass die Verschraubung des Ladebodens beispielsweise mit den Längs- und/oder Querträgern einer besonderen Belastung ausgesetzt ist und lange zuverlässig halten soll. Die Vorteile der Verbindung kommen also insbesondere bei der Verschraubung des Ladebodens zur Geltung. Dabei können wenigstens zwei Längs- und eine Mehrzahl von die Längsträger in Querrichtung verbindenden Querträgern vorzugweise eine Rahmenstruktur bilden. Dabei kann beispielsweise vorgesehen sein, dass die Verschraubung ausschließlich mit den Querträgern erfolgt, beispielsweise um die Längsträger nicht zu sehr durch zusätzliche Bohrungen zu schwächen.

Eine zuverlässigere und langlebigere Schraubverbindung zwischen dem Anbauteil und der Tragstruktur kann erhalten werden, wenn das Dübelelement in der Auszugsrichtung der Schraube nicht nur formschlüssig, sondern auch kraftschlüssig an der Tragstruktur gehalten ist. Dann wird vermieden, dass die Schraube zu locker in der Schraubverbindung aufgenommen ist und sich dementsprechend gegenüber der Tragstruktur in Auszugsrichtung frei bewegen kann. Dabei ist es besonders bevorzugt, wenn die Schraube durch das Dübelelement elastisch federnd gehalten ist. Eine Bewegung der Schraube infolge äußerer Kräfte kann dann in eine elastische Verformung umgesetzt werden, die nach dem Wegfall der auslösenden äußeren Kräfte ebenfalls wegfällt. Die Schraubverbindung wird also etwa durch pendelnde Bewegungen oder ein leichtes Ausziehen der Schraube nicht nachhaltig beeinträchtigt. Darüber hinaus kann durch die elastisch federnde Ausgestaltung des Dübelelements einfach und zuverlässig eine Schraubverbindung mit einer Vorspannung bereitgestellt werden, welche die Zuverlässigkeit und Langlebigkeit der Schraubverbindung erhöht.

Insbesondere zur Bereitstellung einer ausreichenden Elastizität und Langlebigkeit der Schraubverbindung bietet es sich an, wenn das Dübelelement aus Metall, beispielsweise Stahl oder Aluminium, gebildet wird. Dabei ist es herstellungstechnisch und damit kostenmäßig zweckmäßig, wenn das Dübelelement aus einem Metallflachprodukt, insbesondere aus einem Stahl- oder Aluminiumflachprodukt, gefertigt ist. Bei dem Metallflachprodukt kann es sich der Einfachheit halber beispielsweise um ein Band oder eine Platine handeln. Grundsätzlich kann das Dübelelement auch aus einem Kunststoff gefertigt sein. Dies ist aus Gründen der Langlebigkeit und Zuverlässigkeit der Schraubverbindung aber grundsätzlich weniger bevorzugt, da Kunststoffe gegenüber Metallen regelmäßig einer vorzeitigen Alterung unterliegen. Zudem kann das Dübelelement auch aus einem Verbundmaterial umfassend wenigstens ein Metall und wenigstens einen Kunststoff gebildet sein, beispielsweise wenn die Hinzunahme von Kunststoff zu bevorzugten Eigenschaften führt. Der Kunststoff kann dabei beispielsweise als äußere Beschichtung vorgesehen sein, etwa um Korrosion zu vermeiden. Es kann aber auch Kunststoff verwendet werden, um die elastischen Eigenschaften des Dübelelements zu verbessern. Verbundmaterialien können als Flachmaterial mit jeweils einer Schicht aus Metall und Kunststoff zur Dübelherstellung eingesetzt werden. Bedarfsweise kann Kunststoff aber auch nur an bestimmten Stellen des Dübelelements vorgesehen sein. Herstellungstechnisch bietet es sich ebenfalls an, wenn das Dübelelement einstückig ausgebildet ist. Dies ist aus Kostengesichtspunkten umso bedeutender, wenn, wie beispielsweise im Falle des Ladebodens, eine ganze Reihe von Schraubverbindungen zur Montage erforderlich ist. Die einstückige Ausbildung des Dübelelements bietet sich zudem fertigungstechnisch insbesondere dann an, wenn das Dübelelement aus einem Metallflachprodukt, insbesondere Stahl- oder Aluminiumflachprodukt, oder aus einem Kunststoff durch Extrudieren oder Spritzgießen gefertigt ist. Dabei kann die Herstellung bedarfsweise das Zuschneiden des Metallflachprodukts, insbesondere in Form von Stanzen, und das Umformen des entsprechenden Zuschnitts umfassen, um dem Dübelelement eine geeignete Form zu verleihen.

Um die Schraubverbindung zwischen dem Anbauteil und der Tragstruktur einfach bilden und funktional ausgestalten zu können, kann das Dübelelement einen mit der Schraube verschraubten Abschnitt und einen formschlüssig an der Tragstruktur zwischen dem verschraubten Abschnitt und der Tragstruktur vorgesehenen Abschnitt aufweisen. Über den mit der Schraube verschraubten Abschnitt, in dem die Schraube in Eingriff mit dem Dübelelement, bedarfsweise einem Gewinde des Dübelelements, steht, kann die Anzugskraft der Schraube auf das Dübelelement und damit auf die Schraubverbindung übertragen werden. Dabei erlaubt die Anordnung des mit der Schraube verschraubten Abschnitts des Dübelelements die Ausbildung des formschlüssigen Abschnitts infolge der Anzugskraft der Schraube. Durch das Anziehen der Schraube kann vorzugsweise ein zwischen dem mit der Schraube verschraubten Abschnitt und der Tragstruktur vorgesehener Abschnitt deformiert und dabei so aufgeweitet werden, dass in Auszugsrichtung der Schraube ein Formschluss an der Tragstruktur entsteht.

Dabei ist es besonders bevorzugt, wenn der formschlüssige Abschnitt, insbesondere infolge der auf diesen Abschnitt wirkenden Anzugskraft der Schraube, kraftschlüssig an der dem Anbauteil abgewandten Seite der Tragstruktur anliegt. Die Schraubverbindung wird so zuverlässiger und langlebiger. Das Dübelelement wird dabei vorzugsweise infolge der Anzugskraft der Schraube gegen die Tragstruktur gepresst und weiter vorzugsweise infolge der Anzugskraft dabei deformiert. Das ist insbesondere dann bevorzugt, wenn der entsprechende Abschnitt des Dübelelements elastisch und insbesondere federnd ausgebildet ist, im Lastfall also weiter elastisch deformiert werden kann. Bei Wegfall der Last kann der entsprechende Abschnitt des Dübelelements sich dann wieder in die Ausgangsstellung zurückverformen. Ein Versagen oder ein Lockern der Schraubverbindung kann so vermieden werden.

Um die Zuverlässigkeit und Langlebigkeit der Schraubverbindung zu verbessern, kann das Dübelelement einen sich am Anbauteil abstützenden Kragen aufweisen. Dies sorgt für eine definierte Lage des Dübelelements in der Schraubverbindung. Zudem kann der Kragen als eine Art Widerlager für die abschnittsweise Deformation des Dübelelements in einem gegenüber der Tragstruktur auf der dem Anbauteil abgewandten Seite vorstehenden Abschnitt dienen. Die Deformation kann dabei für den Formschluss und vorzugsweise den Kraftschluss zwischen der Einheit aus Schraube und Dübelelement einerseits und der Einheit aus Anbauteil und Tragstruktur andererseits sorgen. Um den Kragen dauerhaft in Position zu halten und so ein Lockern der Schraubverbindung zu vermeiden, kann der Kragen zwischen dem Anbauteil und einem Kopf der Schraube eingeklemmt sein. Der Kragen kann sich der einfachen Herstellung halber grundsätzlich bezogen auf die Schraube radial nach außen erstrecken. Das Dübelelement kann sich dabei in Richtung des freien Endes des Dübelelements konisch erweitern. Alternativ oder zusätzlich kann der Kragen so ausgebildet sein, dass er einen Kopf der Schraube, insbesondere einen Senkkopf, aufnimmt. Hier bietet es sich besonders an, wenn sich das Dübelelement im Bereich des Kragens zum freien Ende des Dübelelements hin konisch nach außen erweitert.

Um das Einschrauben der Schraube in das Dübelelement zu vereinfachen, so dass die Schraubverbindung schneller und kostengünstiger hergestellt werden kann, kann das Dübelelement einen als Verdrehsicherung formschlüssig in das Anbauteil eingreifenden Vorsprung umfassen. Damit das Dübelelement leicht in eine durch das Anbauteil und die Tragstruktur reichende Bohrung eingeschoben werden kann, weist das Dübelelement in Längsrichtung vorzugsweise etwa kreisrunde Querschnitte auf. Da sich das Dübelelement dann aber in der Bohrung während dem Einschrauben der Schraube leicht dreht, was dem Einschrauben entgegenwirkt, kann über einen Vorsprung ein Verkeilen oder Verklemmen des Dübelelements im Anbauteil erreicht werden. Grundsätzlich könnte dies auch in der Tragstruktur erreicht werden, allerdings ist dies weniger bevorzugt, wenn die Tragstruktur aus Metall, insbesondere Stahl oder Aluminium, gebildet wird, während das Anbauteil oder wenigstens die Tragschicht des Anbauteils aus Holz oder einem Holzwerkstoff gebildet wird. Holz ist nämlich grundsätzlich weicher als Metall, so dass der Vorsprung zur Verdrehsicherung des Dübelelements leichter in das Holz einschneiden kann. Weiter bevorzugt aber nicht zwingend ist die Verdrehsicherung an der Außenseite des Kragens vorgesehen. Dann kann die Verdrehsicherung beispielsweise durch das Anziehen der Schraube im Dübelelement in das Material des Anbauteils hinein gedrückt werden.

Die eingangs genannte Aufgabe ist auch gemäß Anspruch 9 gelöst durch ein Verfahren zur Herstellung eines, vorzugsweise einstückigen, Dübelelements, bei dem durch Heraustrennen, vorzugsweise Herausschneiden, insbesondere Herausstanzen, aus einem Metallflachprodukt, insbesondere Stahlflachprodukt, ein Dübelelementrohling gefertigt wird und bei dem die gegenüberliegenden Längsenden des aus dem Metallflachprodukt herausgetrennten Dübelelementrohlings aufeinander zu gebogen werden, so dass die gegenüberliegenden Längsenden des aus dem Metallflachprodukt herausgetrennten Dübelelementrohlings am selben Längsende des Dübelelements vorgesehen sind.

Durch das Verfahren kann ein Dübelelement in im Wesentlichen beliebiger Länge hergestellt werden, und zwar auf eine einfache, schnelle und daher kostengünstige Weise. Dabei greift das Verfahren auf ein kostengünstiges und in hohem Maße verfügbares Material mit für die Funktion des Dübelelements besonders geeigneten Eigenschaften zurück, nämlich einem Metallflachprodukt, bei dem es sich insbesondere um ein Stahlflachprodukt oder ein Aluminiumflachprodukt handelt. Aus diesem lässt sich einfach und schnell ein Dübelelementrohling heraustrennen, und zwar beispielsweise durch Schneiden, insbesondere durch Stanzen.

Die einander gegenüberliegenden Längsenden des entsprechend aus dem Metallflachprodukt herausgetrennten Dübelelementrohlings können dann aufeinander zu gebogen werden. Dabei ist es nicht erforderlich beide Längsenden zu biegen. Es kann grundsätzlich ausreichen, wenn ein Längsende in Richtung des anderen Längsendes gebogen wird. Durch das Biegen bewegen sich die Längsenden aufeinander zu, und zwar soweit, dass die beiden Längsenden des aus dem Metallflachprodukt herausgetrennten Dübelelementrohlings durch das Umbiegen an demselben Längsende des Dübelelements angeordnet sind. Durch das Umbiegen wenigstens eines Längsendes können also beispielsweise zwei Hälften des aus dem Metallflachprodukt herausgetrennten Dübelelementrohlings aufeinander gebogen werden, ohne dass sich die Hälften anschließend tatsächlich ganz oder abschnittsweise berühren. Vorzugsweise sind die Hälften benachbart zueinander angeordnet.

Auf die beschriebene Weise kann einfach eine Dübelform geschaffen werden, die hohen funktionalen Anforderungen gerecht wird. Dabei ist es besonders bevorzugt, wenn das Dübelelement nicht nur einteilig, also als ein Teil, sondern einstückig ist, also aus einem einzigen Materialstück, nämlich dem Metallflachprodukt gebildet ist. Auf diese Weisen können Verfahrensschritte zur Verbindung unterschiedlicher, zunächst separater Teile des Dübelelements vermieden werden.

Das zuvor beschriebene Verfahren zur Herstellung eines Dübelelements ist beispielsweise zur Herstellung eines Nutzfahrzeugs nach einem der Ansprüche 1 bis 8 und/oder zur Durchführung eines Verfahrens nach einem der Ansprüche 12 bis 15 geeignet. Das zuvor beschriebene Verfahren zur Herstellung eines Dübelelements ist aber nicht an die Herstellung eines Nutzfahrzeugs gemäß der Ansprüche 1 bis 8 bzw. 12 bis 15 gebunden. Anders ausgedrückt ist bei dem Nutzfahrzeug gemäß einem der Ansprüche 1 bis 8 das wenigstens eine Dübelelement vorzugsweise nach einem der Ansprüche 9 bis 11 hergestellt. Alternativ oder zusätzlich wird bei dem Verfahren zur Herstellung des Nutzfahrzeugs gemäß einem der Ansprüche 12 bis 15 vorzugsweise ein gemäß einem der Ansprüche 9 bis 11 hergestelltes Dübelelement verwendet. Das Dübelelement kann nämlich kostengünstig und in der erforderlichen Länge hergestellt werden. Dieser Vorteil kommt aber auch bei anderen Anwendungen des Dübelelements zum Tragen.

Zur Vermeidung unnötiger Wiederholungen werden das Nutzfahrzeug, das Verfahren zur Herstellung des Nutzfahrzeugs und das Verfahren zur Herstellung des Dübelelements vorliegend gemeinsam beschrieben, ohne stets im Einzelnen genau zwischen dem Nutzfahrzeug, dem Verfahren zur Herstellung des Nutzfahrzeugs und dem Verfahren zur Herstellung des Dübelelements zu unterscheiden. Dem Fachmann sind die entsprechenden bevorzugten Merkmale jeweils in Bezug auf das Nutzfahrzeug, das Verfahren zur Herstellung des Nutzfahrzeugs und das Verfahren zur Herstellung des Dübelelements anhand des Kontextes und seines Fachwissens ersichtlich.

Das Dübelelement und damit das Verfahren zur Herstellung desselben gemäß einem der Ansprüche 9 bis 11 ist grundsätzlich nicht an eine entsprechende Verwendung des Dübelelements wie etwa der Verwendung gemäß der Ansprüche 1 bis 8 und/oder 12 bis 15, gebunden. Das Dübelelement kann auch zur Verbindung anderer Bauteile, beispielsweise zur Verbindung eines Anbauteils mit einer Tragstruktur, die nicht Teil eines Nutzfahrzeugs sind, verwendet werden. In diesem Zusammenhang sind die vielfältigen Einsatzmöglichkeiten des Dübelelements ein weiterer Vorteil. Das Dübelelement kann beispielsweise in verschiedenen Konstruktionen wie etwa dem Hausbau, dem Bootsbau und dem Fahrzeugbau sowie bei verschiedenen Installationen zum Einsatz kommen. Grundsätzlich eignet sich das Dübelelement zum Einsatz in Hohlräumen solcher oder anderer Konstruktionen, wie etwa im Trockenbau, im Containerbau oder im Terrassenbau.

Als Metallflachprodukt kommt vorliegend auch ein Flachprodukt aus einem Verbundmaterial aus wenigstens einem Metall und wenigstens einem Kunststoff in Frage. Dabei ist jedoch das wenigstens eine Metall für das Fertigen des Dübelelements und/oder die mechanischen Eigenschaften des Dübelelements wesentlich, weshalb vorliegend der Einfachheit halber der Begriff Metallflachprodukt verwendet wird, auch wenn dieses bedarfsweise auch Kunststoff, insbesondere wenigstens eine Kunststoffschicht, aufweisen kann. Es sollte aber vorzugsweise wenigstens eine Schicht aus einem Metall vorgesehen sein, damit die erfindungsgemäßen Vorteile erzielt werden können. Die zusätzliche Verwendung von Kunststoff kann zu weiter bevorzugten Eigenschaften führen. Im Falle einer Beschichtung aus Kunststoff kann beispielsweise die Korrosionsbeständigkeit verbessert werden oder es können durch eine zusätzliche Kunststoffschicht etwa die elastischen Eigenschaften des Dübelelements verbessert werden. Der Kunststoff kann aber anders als das Metall bei dem vorliegenden Metallflachprodukt entbehrlich sein. Hier gelten grundsätzlich auch die vorstehenden Ausführungen zum Material des Dübelelements im Zusammenhang mit den Erläuterungen zum Nutzfahrzeug.

Zu Bildung einer dübelartigen Form des Dübelelements bietet es sich der Einfachheit halber an, die Querseiten des aus dem Metallflachprodukt herausgetrennten Dübelelementrohlings wenigstens abschnittsweise aufeinander zu zu biegen. Dabei ist es bevorzugt, wenn sich die Querseiten nicht oder nur abschnittsweise berühren und so einen im Wesentlichen U-förmigen Querschnitts bilden. Auch hier reicht es grundsätzlich aus, wenn eine Querseite in Richtung der gegenüberliegenden Querseite gebogen wird. Diese U-Form kann nämlich der Einfachheit halber der Aufnahme der Schraube im Dübelelement dienen. Dies gilt insbesondere dann, wenn beispielsweise durch das Umbiegen wenigstens eines Längsendes gegenüberliegend angeordnete Abschnitte des Dübelelemtrohlings oder des Dübelelements entsprechend umgeformt werden. Es können so zueinander geöffnete U-förmige Querschnitte des Dübelelements entstehen, die gemeinsam eine Aufnahme für einen Abschnitt der Schraube bilden, die in das Dübelelement einzuführen ist.

Alternativ oder zusätzlich kann eine Öffnung zur Aufnahme des Schraubengewindes der in das Dübelelement einzuführenden Schraube in einen Abschnitt zwischen den Längsenden des aus dem Metallflachprodukt herausgetrennten Dübelelementrohlings eingebracht werden. Die Öffnung wird vorzugsweise in einem im Wesentlichen zentralen Abschnitt zwischen den Längsenden des aus dem Metallflachprodukt herausgetrennten Dübelelementrohlings eingebracht. Durch das Umbiegen wenigstens eines der Längsenden kann in diesem zentralen Abschnitt nämlich ein Bodenbereich des Dübelelements gebildet werden, der sich zur Verschraubung mit der Schraube besonders eignet.

Um eine einfache und definierte Deformierung des Dübelelements beim Einschrauben der Schraube in das Dübelelement beim Verbinden von Anbauteil und Tragstruktur zu erreichen, können längliche, sich beispielsweise in Längsrichtung des Dübelelementrohlings und/oder des Dübelelements erstreckende Öffnungen in das Metallflachprodukt oder den Dübelelementrohling eingebracht werden. Dies kann einfach und schnell erfolgen, indem die Bereiche des Metallflachprodukts innerhalb der Öffnungen herausgetrennt, insbesondere herausgeschnitten, vorzugsweise herausgestanzt, werden. Dies kann zur weiteren Vereinfachung und Beschleunigung des Verfahrens gleichzeitig mit dem Heraustrennen des Dübelelementrohlings aus dem Metallflachprodukt erfolgen.

Ein funktional bevorzugtes Dübelelement kann erhalten werden, wenn an einem Ende des Dübelelements ein nach außen weisender Kragen vorgesehen wird. Dieser kann sich dann beispielsweise am Anbauteil abstützen. Dabei lässt sich der Kragen besonders einfach fertigen, wenn die Längsenden des aus dem Metallflachprodukt herausgetrennten Dübelelementrohlings nach außen umgebogen werden. Die Reihenfolge des Umbiegens wenigstens eines Längsendes, des Umbiegens wenigstens eines Bereichs der Querseiten, des Umbiegens der Längsenden zur Bildung des Kragens, des Einbringens der Öffnung im zentralen Abschnitt und/oder des Einbringens der länglichen Öffnungen wie zuvor beschrieben ist grundsätzlich nicht festgelegt. Bevorzugt, weil einfach und schnell zu fertigen, ist es, die länglichen Öffnungen und die Öffnung im zentralen Abschnitt in einem Arbeitsschritt mit dem Heraustrennen des Dübelelementrohlings aus dem Metallflachprodukt herzustellen und anschließend durch einen gemeinsamen Umformschritt die Querseiten gegeneinander zu biegen und die Längsenden des Dübelelementrohlings zur Bildung des Kragens nach außen zu biegen. Anschließend kann dann wenigstens eines der Längsenden des Dübelelementrohlings in Richtung des gegenüberliegenden Längsendes des Dübelelementrohlings umgebogen werden. Alternativ oder zusätzlich kann ein als Verdrehsicherung ausgebildeter Vorsprung vorgesehen sein, der bedarfsweise in das Anbauteil eingreifen und ein Verdrehen des Dübelelements im Anbauteil vermeiden kann. Der entsprechende Vorsprung kann einfach und funktional am Kragen vorgesehen werden.

Die eingangs genannte Aufgabe ist zudem gemäß Anspruch 12 durch ein Verfahren der eingangs genannten Art gelöst, bei dem ein Dübelelementrohling aus einem Metallflachprodukt gefertigt wird, bei dem der Dübelelementrohling zu einem Dübelelement umgeformt wird, bei dem das Dübelelement in das Anbauteil eingesteckt und durch die Tragstruktur durchgesteckt wird, bei dem eine Schraube vorher, gleichzeitig oder nachträglich bezogen auf das Einstecken in das Anbauteil in das Dübelelement eingesteckt und anschließend auf der vom Anbauteil abgewandten Seite der Tragstruktur mit dem Dübelelement verschraubt wird und bei dem das Dübelelement durch das Verschrauben mit der Schraube auf der vom Anbauteil abgewandten Seite der Tragstruktur deformiert und das Dübelelement durch die Deformation des Dübelelements formschlüssig an der Tragstruktur gehalten wird.

Das Verfahren erlaubt nicht nur die einfache und kostengünstige Bereitstellung der wenigstens einen Schraubverbindung zwischen dem Anbauteil und der Tragstruktur, sondern zudem auch die einfache und kostengünstige Herstellung des für die wenigstens eine Schraubverbindung benötigten Dübelelements. Als Ausgangspunkt zur Fertigung des Dübelelements dient ein Metallflachprodukt, bei dem es sich der guten Verarbeitbarkeit, der Kosten und der Langlebigkeit halber vorzugsweise um ein Stahl- oder Aluminiumflachprodukt handelt. Das Metallfachprodukt kann dabei der Einfachheit halber als Bandprodukt oder in Form einer Platine vorliegen. Aus dem Metallflachprodukt wird dann ein Dübelelementrohling herausgearbeitet, was einfach und schnell durch Herausschneiden, insbesondere durch Herausstanzen aus dem Metallflachprodukt erfolgen kann. Der Dübelelementrohling kann dann umgeformt werden, um die gewünschte Dübelform zur Aufnahme der Schraube zu erhalten.

Das, insbesondere fertiggestellte, Dübelelement wird dann in das Anbauteil eingesteckt, was zur einfacheren Montage vorzugsweise von der Seite des Anbauteils aus erfolgt. Das Dübelelement wird dabei so weit in das Anbauteil eingesteckt, bis das Dübelelemt die Tragstruktur durchdringt und auf der von dem Anbauteil abgewandten Seite gegenüber der Tragstruktur vorsteht. Das Dübelelement bleibt dabei mit seinem gegenüberliegenden Ende im Anbauteil. Grundsätzlich kann das Dübelelement auch gegenüber dem Anbauteil nach außen vorstehen, dies ist aber weniger bevorzugt. Zum Einstecken des Dübelelements weisen das Anbauteil und die Tragstruktur jeweils durchgehende Öffnungen, insbesondere Bohrungen auf. Zum Zecke einer zuverlässigen Schraubverbindung sind die Öffnungen bzw. Bohrungen vorzugsweise konzentrisch angeordnet.

Die Schraube kann beim Einstecken des Dübelelements in das Anbauteil und die Tragstruktur schon in das Dübelelement eingesteckt, insbesondere mit dem Dübelelement verschraubt sein, um die Fertigung der Schraubverbindung zu beschleunigen. Beispielsweise bilden die Schraube und das Dübelelement eine vorkonfektionierte separate Baugruppe. Bedarfsweise kann die Schraube beim Einstecken des Dübelelements in das Anbauteil eingesteckt und, bedarfsweise, erst dann mit dem Dübelelement verschraubt werden. Eine Vorkonfektionierung kann dann entfallen. Zeitaufwendiger aber einfacher kann es sein, wenn die Schraube nachträglich in das Dübelelement eingesteckt und bedarfsweise mit dem Dübelelement verschraubt wird. In jedem Fall wird die Schraube auf der vom Anbauteil abgewandten Seite der Tragstruktur, bedarfsweise weiter, mit dem Dübelelement verschraubt. Dadurch wird das Dübelelement auf der vom Anbauteil abgewandten Seite der Tragstruktur deformiert, wobei die Deformation zu einer Aufweitung und einem Formschluss zwischen dem Dübelelement, der Schraube und der Tragstruktur in Auszugsrichtung der Schraube führt.

Unter einem Metallflachprodukt kann im Zusammenhang mit dem zuvor beschriebenen Verfahren zum Verbinden eines Anbauteils an einer Tragstruktur eines Nutzfahrzeugs, wie bereits im Zusammenhang mit dem Verfahren zur Herstellung eines Dübelelements und im Zusammenhang mit dem Nutzfahrzeug erläutert worden ist, auch ein Flachprodukt aus einem Verbundmaterial verstanden werden. Das Verbundmaterial weist dann wenigstens eine Metallschicht auf und kann wenigstens eine Kunststoffschicht aufweisen. Bedarfsweise ist der Kunststoff oder ein Teil des Kunststoffs aber auch nur bereichsweise und nicht als durchgehende Schicht des Flachprodukts vorgesehen. Zur Ausgestaltung des Metallflachprodukts wird zur Vermeidung unnötiger Wiederholungen an dieser Stelle auch auf die vorherigen Ausführungen verwiesen.

Auch verfahrensmäßig ist bei einer ersten besonders bevorzugten Ausgestaltung das Anbauteil in Form eines Ladebodens oder wenigstens einer Tragschicht des Ladebodens ausgebildet, während alternativ oder zusätzlich das Anbauteil über die wenigstens eine Schraubverbindung mit wenigstens einem Längsträger und/oder wenigstens einem Querträger des Nutzfahrzeugs, insbesondere eines Chassis oder eines Aufbaus des Nutzfahrzeugs, verbunden wird. Aus den bereits diskutierten Gründen kommen die Vorteile des Verfahrens in diesem Fall besonders zum Tragen.

Eine besonders zuverlässige Schraubverbindung wird erhalten, wenn die Schraube durch die Deformation des Dübelelements kraftschlüssig, und zwar insbesondere elastisch federnd, an der Tragstruktur gehalten wird. Dies setzt eine entsprechende Materialauswahl für die Dübelelementherstellung voraus, wobei auf eine entsprechende Elastizität und Flexibilität zu achten ist.

Um einfach und schnell eine Dübelform zu erhalten, wenn als Ausgangsmaterial ein Metallflachprodukt verwendet wird, können die Längsenden des Dübelelementrohlings zueinander umgebogen also im Wesentlichen aufeinander gebogen werden, wobei sich die entsprechenden Enden allerdings nicht zwingend gegenseitig berühren müssen. Alternativ oder zusätzlich kann an einem Ende des Dübelelements, insbesondere im Bereich der zuvor aufeinander zugebogenen Längsenden des Dübelelementrohlings ein nach außen weisender Kragen vorgesehen werden. Dies geschieht vorzugsweise einfach und schnell durch Umformen, insbesondere durch Einstecken eines entsprechend geformten Dorns in den Dübelelementrohling. Über den Kragen kann das Dübelelement sicher und dauerhaft am Anbauteil gehalten werden. Der Kragen weist dabei vorzugsweise die bereits zuvor beschriebene Form auf.

Um in einfacher Weise die Ausbildung einer formschlüssigen Verbindung zwischen dem Dübelelement und der Tragstruktur in Auszugsrichtung der Schraube sicherzustellen, können längliche, sich in Längsrichtung des Dübelelementrohlings erstreckende Öffnungen in das Metallflachrpodukt oder den Dübelelementrohling eingebracht werden. Besonders einfach ist es dabei, wenn die Öffnungen durch Ausschneiden aus dem Metallflachprodukt, insbesondere durch Stanzen, geschaffen werden. Alternativ oder zusätzlich können die länglichen, sich in Längsrichtung des Dübelelements erstreckenden Öffnungen aber auch in den Dübelelementrohling oder das Dübelelement eingebracht werden. Auch hierbei bietet sich grundsätzlich das Stanzen als Fertigungsschritt an.

Die länglichen Öffnungen können zwischeneinander Stege definieren, die durch das Anziehen der Schraube gezielt und definiert deformiert werden können, um das Dübelelement an dieser Stelle aufzuweiten und so für einen Formschluss der Verbindung zu sorgen.

Zur Vereinfachung des Verfahrens kann eine Baugruppe aus der Schraube und dem formschlüssig an der Schraube gehalten Dübelelement gebildet werden. Dies kann der Einfachheit halber dadurch geschehen, dass das Dübelelement abschnittsweise mit der Schraube verschraubt ist. Ergänzend kann das Dübelelement zudem abschnittsweise formschlüssig in einer Aussparung im Kopf der Schraube gehalten sein. Dies hat den Vorteil, dass sich die zuvor zueinander gebogenen Längsenden des Dübelelementrohlings beim fertigen Dübelelement nicht wieder nennenswert voneinander entfernen und sich das Dübelelement nicht wieder aufweitet. Ein weiterer Vorteil der Baugruppe aus Schraube und Dübelelement besteht darin, dass diese vorkonfektioniert und separat gelagert werden kann. Die vorkonfektionierte Baugruppe kann dann in einem Arbeitsgang in das Anbauteil und die Tragstruktur eingeschobenen werden, was eine verfahrensmäßige Vereinfachung darstellt.

Grundsätzlich ist es bevorzugt, aber keineswegs zwingend, wenn die Herstellung des Nutzfahrzeugs gemäß den Ansprüchen 12 bis 15 mit der Herstellung des Dübelelements gemäß den Ansprüchen 9 bis 11 kombiniert wird. Ebenso ist es bevorzugt, aber nicht zwingend, wenn das wenigstens eine Dübelelement des Nutzfahrzeugs nach den Ansprüchen 1 bis 8 nach einem der Ansprüche 9 bis 11 hergestellt ist und/oder wenn das Nutzfahrzeug nach den Ansprüchen 1 bis 8 nach einem der Ansprüche 12 bis 15 hergestellt ist.

Nachfolgend wir die Erfindung anhand einer lediglich ein Ausführungsbeispiel darstellenden Zeichnung näher erläutert. In der Zeichnung zeigt
- Fig. 1: ein erfindungsgemäßer Aufbau eines Nutzfahrzeugs in perspektivischer Ansicht,
- Fig. 2A-B: eine Schraubverbindung des Aufbaus aus Fig. 1 im ungefügten und im gefügten Zustand in einer Schnittansicht entlang einer Schnittebene längs des Aufbaus senkrecht zum Ladeboden,
- Fig. 3: einen Dübelelementrohling zur Herstellung des Dübelelements der Schraubverbindung aus Fig. 2 nach dem Ausschneiden aus einem Metallflachprodukt in einer Draufsicht,
- Fig. 4: den Dübelelementrohling aus Fig. 4 nach dem Umformen in einer perspektivischen Ansicht und
- Fig. 5: ein Detail des Anbauteils des Aufbaus aus Fig. 1 mit einem darin eingelassenen Dübelelement in Draufsicht.

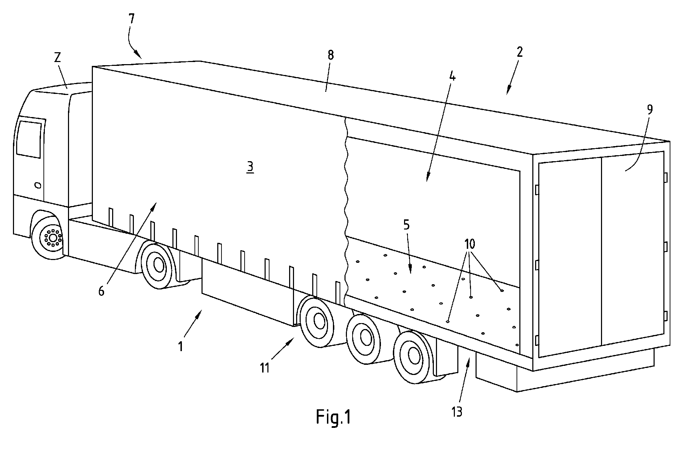

In der Fig. 1 ist ein Nutzfahrzeug 1 in Form eines Sattelaufliegers mit einem Aufbau 2 in Form eines Planenaufbaus dargestellt. Das Nutzfahrzeug 1 wird von einer Zugmaschine Z gezogen. Bei dem dargestellten Aufbau 2 handelt es sich um einen Planenaufbau, bei dem der hintere Teil der vorderen Seitenplane 3 weggelassen worden ist, um den Blick in den Laderaum 4 und auf den ein Anbauteil 5 bildenden Ladeboden freizugeben. Neben dem Ladeboden 5 und den Seitenplanen 3 an den Seitenwänden 6 umfasst der dargestellte und insoweit bevorzugte Aufbau 2 eine Stirnwand 7, ein Dach 8 und eine Rückwand 9.

Das Anbauteil 5 in Form des Ladebodens ist über eine Mehrzahl von Schraubverbindungen 10 mit einer Rahmenstruktur des Chassis 11 des Nutzfahrzeugs 1 verbunden. Die Rahmenstruktur des Chassis 11 umfasst dabei zwei Längsträger und mehrere die Längsträger in Querrichtung des Nutzfahrzeugs verbindende Querträger 12. Die Längsträger und die Querträger 12 der Raumstruktur bilden die Tragstruktur 13 für den Ladeboden.

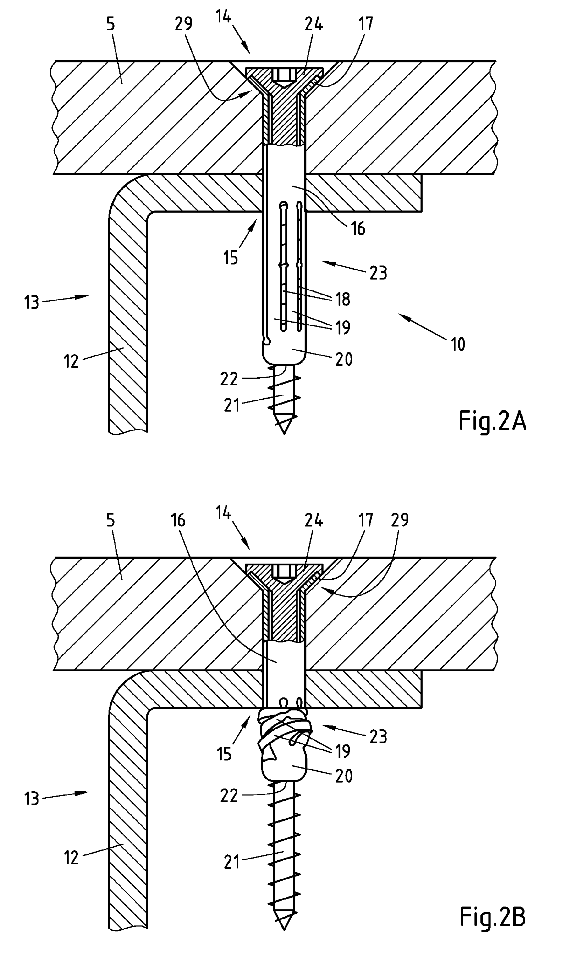

Eine Schraubverbindung 10 zur Verbindung des Anbauteils 5 an die Tragstruktur 13 ist in der Fig. 2A im nicht gefügten Zustand und in der Figur 2B im gefügten Zustand dargestellt. Das Anbauteil 5 und die Tragstruktur 13 liegen aneinander an und weisen, insbesondere konzentrisch zueinander ausgerichtete, Öffnungen 14,15 auf, die vorliegend als Bohrungen ausgeführt sind. Die Öffnungen 14,15 durchdringen sowohl das Anbauteil 5 als auch die Tragstruktur 13 vollständig. Zudem weisen die Öffnungen 14,15 etwa den gleichen Durchmesser auf. Auf der der Tragstruktur 13 abgewandten Seite des Anbauteils 5 erweitert sich die Öffnung 14 konisch nach außen.

In die Öffnungen 14,15 wird ein Dübelelement 16 eingeführt, bis ein an einem Ende des Dübelelements 16 vorgesehener, radial nach außen abstehender Kragen 17 an dem sich konisch erweiternden Teil der Öffnung 14 des Anbauteils 5 in Anlage kommt. In dieser Stellung des Dübelelements 16 ragt das gegenüberliegende freie Ende des Dübelelements 16 deutlich auf der dem Anbauteil 5 abgewandten Seite der Tragstruktur 13 gegenüber der Tragstruktur 13 vor. In diesem Bereich des Dübelelements 16 ist eine Reihe von länglichen Öffnungen 18 vorgesehen, die über den Umfang des Dübelelements 16 verteilt angeordnet und über Stege 19 voneinander beabstandet sind. Die länglichen Öffnungen 18 enden jeweils mit einem Abstand zum freien Ende des Dübelelements 16. In diesem Abschnitt 20 des Dübelelements 16 ist die in das Dübelelement 16 eingebrachte Schraube 21 mit dem Dübelelement 16 verschraubt. Dabei steht das Dübelelement 16 mit dem entsprechenden Abschnitt 20 in Eingriff mit dem Gewinde der Schraube 21, und zwar über eine Öffnung 22 am Längsende des Dübelelements 16.

Zum Fügen der Verbindung wird die Schraube 21 weiter als in der Figur 2A dargestellt angezogen. Durch die entsprechende von der Schraube 21 auf das Dübelelement 16 übertragene Anzugskraft wird der mit der Schraube 21 verschraubte Abschnitt 20 des Dübelelements 16 in Richtung des Anbauteils 5 gezogen. Dies wird durch eine entsprechende Deformierung eines Abschnitts 23 des Dübelelements 16 zwischen dem mit der Schraube 21 verschraubten Abschnitt 20 und der Tragstruktur 13 ermöglicht. Dabei erfolgt die Deformierung des entsprechenden Abschnitts 23 des Dübelelements 16 durch die länglichen Öffnungen 18 voneinander beabstandeter Stege 19 in einer im Wesentlichen vorbestimmten und definierten Weise. Die Deformation des entsprechenden Abschnitts 23 des Dübelelements 16 hat zur Folge, dass sich der entsprechende Abschnitt 23 aufweitet und einen Formschuss in Auszugsrichtung der Schraube 21 mit der Tragstruktur 13 sowie der Schraube 21 bildet. Aufgrund der Elastizität des entsprechend deformierten Abschnitts 23 des Dübelelements 16 wird in die Auszugsrichtung der Schraube 21 zudem ein Kraftschluss ausgebildet und zwar zwischen der Einheit aus Dübelelement 16 und Schraube 21 einerseits sowie der Einheit aus Anbauteil 5 und Tragstruktur 13 andererseits. Dabei presst der als Senkkopf ausgebildete Kopf 24 der Schraube 21 den Kragen 17 des Dübelelements 16 gegen den sich konisch erweiternden Teil der Öffnung 14 des Anbauteils 5.

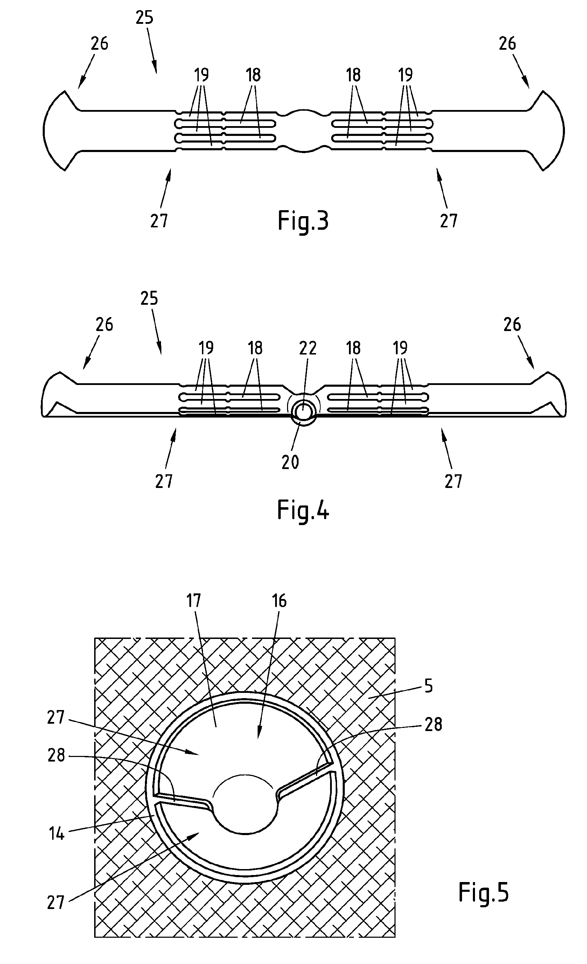

In den Fig. 3 und 4 sind zwei Dübelelementrohlinge 25 in unterschiedlichen Stadien bei der Herstellung des Dübelelements 16 dargestellt. Der Dübelelementrohling 25 gemäß Fig. 3 ist aus einem Metallflachprodukt durch Stanzen herausgetrennt worden. Der Dübelelementrohling 25 weist an seinen gegenüberliegenden Längsenden Erweiterungen 26 auf, die nachfolgend zu einem Kragen 17 des Dübelelements 16 umgebogen werden. Des Weiteren sind längliche Öffnungen 18 vorgesehen, die durch Stege 19 voneinander beabstandet sind. Die länglichen Öffnungen 18 sind zudem einerseits von dem Mittelpunkt des Dübelelementrohlings 25 als auch von den Erweiterungen 26 an den Längsenden des Dübelelementrohlings 25 beabstandet.

Durch Umformen des Dübelelementrohlings 25 gemäß Fig. 3 wird der Dübelelementrohling 25 gemäß Fig. 4 gebildet, bei dem der Dübelelementrohling 25 über den überwiegenden Teil seiner Längserstreckung gewölbt ist. Dabei werden die beiden Querseiten des Dübelelementrohlings 25 aufeinander zu gebogen, so dass der Dübelelementrohling 25 zwischen den entsprechend umgebogenen Querseiten eine etwa U-förmige Gestalt annimmt. Auf diese Weise kann leicht eine Dübelform erzeugt werden, wenn die Längsenden des Dübelelementrohlings 25 aufeinander zugebogen werden. Vorliegend liegen dann die Öffnungen der U-förmigen Abschnitte einander gegenüber, wodurch sich im entsprechenden Abschnitt eine hülsenartige Form des Dübelelements 16 bildet. Gleichzeitig dazu, zuvor oder danach können die Erweiterungen 26 an den Längsenden des Dübelelemtrohlings 25 nach außen gebogen werden, um den Kragen 17 des Dübelelements 16 zu bilden. In der Mitte des Dübelelementrohlings 25 gemäß Fig. 4 wird zudem noch eine Öffnung 22, bedarfsweise mit einem Gewinde eingebracht, über die die Schraube 21 mit dem Dübelelement 16 verschraubt werden kann.

In der Fig. 5 ist das fertiggestellte Dübelelement 16 im in das Anbauteil 5 eingesteckten Zustand in Draufsicht auf das Anbauteil 5 dargestellt. Der Kragen 17 des Dübelelements 16 steht dabei nicht gegenüber der Oberseite des Anbauteils 5 vor und erweitert sich derart konisch, dass der Kragen 17 den Kopf 24 der in das Dübelelement 16 einzuführenden Schraube 21 aufnehmen kann. Auf diese Weise kann vermieden werden, dass die Schraube 21 gegenüber der Oberseite des Anbauteils 5 vorsteht.

Das in den Fig. 2 und 5 dargestellte Dübelelement 16 ist über den überwiegenden Teil der Längserstreckung des Dübelelements 16 durch zwei angrenzende Dübelhälften 27 zusammengesetzt, die über zwei Spalte 28 voneinander beabstandet sind. Die beiden Spalte 28 enden in Längsrichtung des Dübelelements 16 vor dem gegenüberliegenden freien Ende des Dübelelements 16 angrenzend zu dem mit der Schraube 21 verschraubten Abschnitt 20 des Dübelelements 16.

Des Weiteren ist bei dem dargestellten und insoweit bevorzugten Nutzfahrzeug 1 die Schraube 21 und das Dübelelement zu einer gemeinsamen Baugruppe zusammengefasst, so dass die Schraube 21 und das Dübelelement 16, wie in der Fig. 2A dargestellt, gemeinsam in die Öffnungen 14,15 des Anbauteils 5 und der Tragstruktur 13 eingeschoben werden können. Die Schraube 21 und das Dübelelement 16 können zu einer Baugruppe zusammengefast werden, die vor ihrer Verwendung problemlos und ohne Deformierung des Dübelelements 16 gelagert werden kann, weil die Schraube 21 mit ihrem Außengewinde mit der Öffnung 22 an einem Ende des Dübelelements 16 verschraubt ist und der Kragen 17 des Dübelelements 16 formschlüssig in eine Aussparung 29 im Kopf 24 der Schraube 21 eingreift. Der Formschluss wirkt bei der in der Fig. 2A dargestellten und insoweit bevorzugten Baugruppe radial zur Schraube 21 nach außen. Die Längsenden des aus dem Metallflachprodukt herausgetrennten Dübelelementrohlings 25 können daher beispielsweise durch eine Biegebewegung nicht mehr nennenswert voneinander weg bewegt werden.

## Patentansprüche

1. Nutzfahrzeug (1), insbesondere Anhänger oder Sattelauflieger, mit einer Tragstruktur (13) und einem Anbauteil (5), wobei das Anbauteil (5) über wenigstens eine Schraubverbindung (10) mit der Tragstruktur (13) verbunden ist und wobei die wenigstens eine Schraubverbindung (10) eine wenigstens teilweise das Anbauteil (5) und die Tragstruktur (13) durchdringende Schraube (21) umfasst,
**dadurch gekennzeichnet, dass**
die wenigstens eine Schraubverbindung (10) ein wenigstens teilweise das Anbauteil (5) und die Tragstruktur (13) durchdringendes Dübelelement (16) umfasst und dass das Dübelelement (16) in der Auszugsrichtung der Schraube (21) formschlüssig an der Tragstruktur (13) gehalten ist.

2. Nutzfahrzeug nach Anspruch 1,
**dadurch gekennzeichnet, dass**
das Anbauteil (5) der Ladeboden oder wenigstens die Tragschicht des Ladebodens ist und/oder dass die Tragstruktur (13) wenigstens einen Längsträger und/oder wenigstens einen Querträger (12) des Nutzfahrzeugs (1), insbesondere eines Chassis (11) oder eines Aufbaus (2), umfasst.

3. Nutzfahrzeug nach Anspruch 1 oder 2,
**dadurch gekennzeichnet, dass**
das Dübelelement (16) in der Auszugsrichtung der Schraube (21) kraftschlüssig, insbesondere elastisch federnd, an der Tragstruktur (13) gehalten ist.

4. Nutzfahrzeug nach einem der Ansprüche 1 bis 3,
**dadurch gekennzeichnet, dass**
das Dübelelement (16) aus Metall, vorzugsweise aus einem Metallflachprodukt, insbesondere Stahlflachprodukt, gefertigt ist und/oder dass das Dübelelement (16) einstückig ausgebildet, vorzugsweise durch Schneiden, insbesondere Stanzen, und Umformen aus einem Metallflachprodukt, insbesondere Stahlflachprodukt, gefertigt ist.

5. Nutzfahrzeug nach einem der Ansprüche 1 bis 4,
**dadurch gekennzeichnet, dass**
das Dübelelement (16) einen mit der Schraube (21) verschraubten Abschnitt (20) und einen formschlüssig, vorzugsweise formschlüssig und kraftschlüssig, an der Tragstruktur (13) gehaltenen zwischen dem mit der Schraube verschraubten Abschnitt (21) und der Tragstruktur (13) vorgesehenen Abschnitt (23) aufweist.

6. Nutzfahrzeug nach einem der Ansprüche 1 bis 5,
**dadurch gekennzeichnet, dass**
das Dübelelement (16) infolge der Anzugskraft der Schraube (21) unter Bildung des formschlüssigen, vorzugsweise formschlüssigen und kraftschlüssigen, Abschnitts (23) deformiert ist.

7. Nutzfahrzeug nach einem der Ansprüche 1 bis 6,
**dadurch gekennzeichnet, dass**
das Dübelelement (16) einen sich am Anbauteil (5) abstützenden Kragen (17) aufweist und, vorzugsweise, dass der Kragen (17) zwischen dem Anbauteil (5) und einem Kopf (24) der Schraube (21) eingeklemmt ist.

8. Nutzfahrzeug nach einem der Ansprüche 1 bis 7,
**dadurch gekennzeichnet, dass**
das Dübelelement (16), vorzugsweise am Kragen (17), einen als Verdrehsicherung formschlüssig in das Anbauteil eingreifenden Vorsprung aufweist.

9. Verfahren zur Herstellung eines, vorzugsweise einstückigen, Dübelelements (16), bei dem durch Heraustrennen, vorzugsweise Herausschneiden, insbesondere Herausstanzen, aus einem Metallflachprodukt, insbesondere Stahlflachprodukt, ein Dübelelementrohling (25) gefertigt wird und
bei dem die gegenüberliegenden Längsenden des aus dem Metallflachprodukt herausgetrennten Dübelelementrohlings (25) aufeinander zu gebogen werden, so dass die gegenüberliegenden Längsenden des aus dem Metallflachprodukt herausgetrennten Dübelelementrohlings (25) am selben Längsende des Dübelelements (16) vorgesehen sind.

10. Verfahren nach Anspruch 9,
bei dem die Querseiten des aus dem Metallflachprodukt herausgetrennten Dübelelementrohlings (25) wenigstens abschnittsweise zur Bildung eines im Wesentlichen U-förmigen Querschnitts aufeinander zu gebogen werden und bei dem, vorzugsweise, aus gegenüberliegenden zueinander geöffneten U-förmigen Querschnitten des Dübelelements (16) eine Aufnahme für einen Abschnitt der Schraube (21) gebildet wird.

11. Verfahren nach Anspruch 9 oder 10,
bei dem eine Öffnung (22) zur Aufnahme eines Schraubengewindes in einen, vorzugsweise im Wesentlichen zentralen, Abschnitt zwischen den Längsenden des aus dem Metallflachprodukt herausgetrennten Dübelelementrohlings (25) eingebracht wird,
und/oder
bei dem längliche, sich in Längsrichtung des Dübelelementrohlings (25) und/oder des Dübelelements (16) erstreckende Öffnungen (18) in das Metallflachprodukt oder den Dübelelementrohling (25) eingebracht werden und/oder
bei dem an einem Ende des Dübelelements (16), vorzugsweise durch Umbiegen der Längsenden des aus dem Metallflachprodukt herausgetrennten Dübelelementrohlings (25), ein nach außen weisender Kragen (17) vorgesehen wird
und/oder
bei dem, vorzugsweise am Kragen (17), ein als Verdrehsicherung ausgebildeter Vorsprung vorgesehen wird.

12. Verfahren zum Verbinden eines Anbauteils (5) an einer Tragstruktur (13) eines Nutzfahrzeugs (1), insbesondere Anhängers oder Sattelaufliegers, vorzugsweise zur Herstellung eines Nutzfahrzeugs (1) nach einem der Ansprüche 1 bis 8 und/oder unter Verwendung eines Dübelelements (16) hergestellt nach einem der Ansprüche 9 bis 11,
bei dem ein Dübelelementrohling (25) aus einem Metallflachprodukt gefertigt wird,
bei dem der Dübelelementrohling (25) zu einem Dübelelement (16) umgeformt wird,bei dem das Dübelelement (16) in das Anbauteil (5) eingesteckt und durch die Tragstruktur (13) durchgesteckt wird,
bei dem eine Schraube (21) vorher, gleichzeitig oder nachträglich bezogen auf das Einstecken in das Anbauteil (5) in das Dübelelement (16) eingesteckt und anschließend auf der vom Anbauteil (5) abgewandten Seite der Tragstruktur (13) mit dem Dübelelement (16) verschraubt wird und
bei dem das Dübelelement (16) durch das Verschrauben mit der Schraube (21) auf der vom Anbauteil (5) abgewandten Seite der Tragstruktur (13) deformiert und das Dübelelement (16) durch die Deformation des Dübelelements (16) formschlüssig an der Tragstruktur (13) gehalten wird.

13. Verfahren nach Anspruch 12,
bei dem ein Anbauteil (5) in Form eines Ladebodens oder wenigstens die Tragschicht des Ladebodens mit einem Längsträger und/oder Querträger (12) des Nutzfahrzeugs (1), insbesondere eines Chassis (11) oder eines Aufbaus (2), verbunden wird.

14. Verfahren nach Anspruch 12 oder 13,
bei dem die Schraube (21) durch die Deformation des Dübelelements (16) kraftschlüssig, insbesondere elastisch federnd, an der Tragstruktur (13) gehalten wird und
bei dem, vorzugsweise, durch das Verschrauben des Dübelelements (16) mit der Schraube (21) Stege (19) zwischen länglichen Öffnungen (18) im Dübelelement (16) deformiert werden.

15. Verfahren nach einem der Ansprüche 12 bis 14,
bei dem eine Baugruppe aus der Schraube (21) und dem formschlüssig an der Schraube (21) gehalten Dübelelement (16) gebildet wird, vorzugsweise indem das Dübelelement (16) abschnittsweise mit der Schraube (21) verschraubt und, weiter vorzugsweise, abschnittsweise formschlüssig in einer Aussparung im Kopf (24) der Schraube (21) gehalten wird, und
bei dem die Baugruppe in das Anbauteil (5) und die Tragstruktur (13) eingesteckt wird.
